# EUROPÄISCHE PATENTSCHRIFT

(11) **EP 1 381 529 B1**
(45) Veröffentlichungstag und Bekanntmachung des Hinweises auf die Patenterteilung: **05.10.2005**
(21) Anmeldenummer: 02740290.8
(22) Anmeldetag: 24.04.2002
(51) Int. Cl.: B60K 15/035, F02M 25/08

(54) **KRAFTSTOFFBEHÄLTER**
FUEL TANK
RESERVOIR DE CARBURANT

(30) Priorität: 26.04.2001 DE 10120542
(43) Veröffentlichungstag der Anmeldung: 21.01.2004
(73) Patentinhaber: Kautex Textron GmbH & Co. KG., 53229 Bonn (DE)
(72) Erfinder: VIEBAHN, Reiner, 56566 Neuwied (DE)
(74) Vertreter: Kierdorf, Theodor
(86) Internationale Anmeldenummer: PCT/DE2002/001498
(87) Internationale Veröffentlichungsnummer: WO 2002/087915

(56) Entgegenhaltungen:
- EP-A- 0 921 026
- DE-U- 20 019 968
- US-A- 5 570 672

## Beschreibung

Die Erfindung betrifft einen Kraftstoffbehälter für ein Kfz mit den Merkmalen des Oberbegriffs von Anspruch 1. Die Erfindung betrifft weiterhin einen Kraftstoffbehälter für ein Kfz mit den Merkmalen des Oberbegriffs von Anspruch 2.

Es ist bei Kraftstoffbehältern für Kfz eine übliche Maßnahme, deren Entlüftungseinrichtungen an ein Aktivkohlefilter als Kraftstoffdampffilter anzuschließen, so dass sichergestellt wird, dass bei der Betankung zwangsläufig aus dem Volumen des Kraftstoffbehälters entweichende Gase nicht ungereinigt an die Atmosphäre gelangen. Selbstverständlich werden auch solche Gase von einem Entlüftungssystem abgegeben, die durch Schaukel- und Schwappbewegung des Kraftstoffs oder durch Wärmeeinwirkung freigesetzt werden. Üblicherweise wird das als Kraftstoffdampffilter dienende Aktivkohlefilter zu dessen Regeneration durch vom Motor des Kfz angesaugte Verbrennungsluft regeneriert. Ein solches Aktivkohlefilter hat eine begrenzte Kapazität. Aus Kosten- und Platzgründen ist es wünschenswert, das Aktivkohlefilter möglichst klein zu halten. Dies ist nur dann möglich, wenn dessen Beaufschlagung mit kohlenwasserstoffbeladenen Gasen möglichst gering gehalten wird, d. h. wenn das diesen durchströmende Gasvolumen verhältnismäßig klein gehalten wird.
Die Durchströmung des Aktivkohlefilters ist naturgemäß bei der Betankung am größten. Hierbei muss der Kraftstoffbehälter einen Kraftstoffvolumenstrom von zwischen 30 und 60 l/min aufnehmen. Ein entsprechender Volumenstrom an Gas bzw. Luft muss gleichzeitig abgeführt werden. Um hierbei die Belastung des Aktivkohlefilters möglichst gering zu halten, ist es bekannt, an den Einfüllstutzen des Tanks eine sogenannte Rezirkulationsleitung anzuschließen, mit der bei der Betankung eine Rezirkulation.des zum Aktivkohlefilter geführten Gases durch den Einfüllstutzen bzw. durch das Einfüllrohr bewirkt wird.

Mit anderen Worten, die bei der Betankung von dem aus der Zapfpistole austretenden Kraftstoffstrahl mitgerissene Umgebungsluft wird, bevor sie wieder über das Aktivkohlefilter in die Atmosphäre gelangen kann, über die Rezirkulationsleitung vor dem Aktivkohlefilter abgezweigt und wieder durch das Einfüllrohr geführt. Auf diese Art und Weise wird das als Aktivkohlefilter ausgeführte Kraftstoffdampffilter von einem Teil der von dem Kraftstoff verdrängten Gase freigehalten.

Der Menge der im Kreislauf geführten bzw. rezirkulierten Gase sind Grenzen gesetzt, und zwar hauptsächlich durch den Leitungsdurchmesser der Rezirkulationsleitung. Die Rezirkulationsleitung mündet normalerweise etwa im Bereich der Austrittsöffnung der Zapfpistole im Einfüllstutzen des Tanks. Bei der Betankung soll jedenfalls vermieden werden, dass kohlenwasserstoffbeladene Dämpfe oder Gase aus dem Tank über den Einfüllstutzen an die Atmosphäre entweichen. Aus diesem Grunde ist es bekannt, Einfüllrohre vorzusehen, welche zumindest über Teilbereiche ihres Umfangs elastisch verformbar und so ausgebildet sind, dass sie im unaufgeweiteten Zustand eine Verengung des Füllrohrs darstellen. Bei der Betankung des Kfz erfolgt eine Aufweitung des Querschnitts des Einfüllrohrs durch den auftreffenden Kraftstoffstrahl, so dass ein Entweichen der im Kraftstoffbehälter befindlichen Gase durch das Einfüllrohr während der Betankung zuverlässig vermieden wird. Eine derartige Einrichtung ist beispielsweise aus der DE 197 16 812 A1 als sogenanntes "liquid seal" bekannt. Alternativ hierzu sind hüllenartige Fortsätze am auslaufseitigen Ende des Einfüllrohrs bekannt, die bis auf den Boden des Kraftstoffbehälters reichen und durch den hydrostatischen Druck des im Behälter anstehenden Flüssigkeitsspiegels verschlossen gehalten werden.

Wird der Durchmesser der Rezirkulationsleitung zu groß gewählt, besteht die Gefahr, dass nur ein Teil der aus der Rezirkulationsleitung in den Einfüllstutzen austretenden Gase tatsächlich im Einfüllrohr mitgeführt wird, wohingegen der andere Teil über den Einfüllstutzen an die Atmosphäre gelangt. Hierdurch wird die Wirksamkeit des "liquid seal" herabgesetzt.

Aus der US-A-5,570,672, gemäß welcher der Oberbegriff der unabhängigen Ansprüche 1 und 2 abgegrenzt wurde, ist ein Kraftstoffbehälter bekannt, bei dem eine außerhalb des Kraftstoffbehälters verlegte Rezirkulationsleitung vorgesehen ist, die einerseits an das einlaufseitige Ende des Einfüllrohrs des Kraftstoffbehälters und andererseits mit einem Kraftstoffdampffilter verbunden ist. Die Rezirkulationsleitung ist in bekannter Art und Weise außerhalb des Kraftstoffbehälters angeordnet.

Aus der EP-A-0 921 026 ist ein Entlüftungssystem für einen Kraftstoffbehälter bekannt, bei dem eine Entlüftungsleitung im Inneren des Behältervolumens geführt ist. Die Entlüftungsleitung mündet in eine parallel zum Einfüllstutzen geführte weitere Entlüftungsleitung, deren Querschnitt im Bereich des auslaufseitigen Endes des Einfüllrohrs so bemessen ist, dass in diesem Bereich gasförmige und flüssige Kohlenwasserstoffe voneinander getrennt werden, wobei die flüssigen Kohlenwasserstoffe durch den Sog des bei der Betankung einströmenden Kraftstoffs aufgrund des sich dort einstellenden Venturieffektes zurück in den Kraftstoffbehälter gezogen werden.

Der Erfindung liegt die Aufgabe zugrunde, mit möglichst einfachen Mitteln die Durchströmung des Kraftstoffdampffilters zu reduzieren, wobei gleichzeitig sichergestellt werden soll, dass bei der Betankung keine Kraftstoffdämpfe oder kohlenwasserstoffbeladenen Gase über das Einfüllrohr und den Einfüllstutzen des Tanks an die Atmosphäre gelangen.

Die Aufgabe wird gelöst mit den Merkmalen der Ansprüche 1 oder 2. Insbesondere dadurch, dass die Rezirkulationsleitung innerhalb des von dem Behälter umschlossenen Volumens am auslaufseitigen Ende des Einfüllrohrs an dieses angeschlossen ist, ergeben sich verschiedene Vorzüge. Einerseits kann der Durchmesser der Rezirkulationsleitung wesentlich größer gewählt werden, so dass eine höhere Rezirkulationsrate möglich ist. Außerdem kann durch eine solche Anordnung der Rezirkulationsleitung letztere vollständig in dem Kraftstoffbehälter angeordnet sein, so dass gleichzeitig eine mögliche Permeationsquelle für Kohlenwasserstoffe ausgeschaltet ist. Bekanntermaßen sind außerhalb des Kraftstoffbehälters verlegte Leitungen und Anschlüsse Emissionsquellen für gasförmige Kohlenwasserstoffe, die es zu minimieren gilt.

Die Erfindung macht sich eine Art Venturieffekt im auslaufseitigen Bereich des Einfüllrohrs zunutze, so dass eine im Kraftstoffbehälter verlegte Rezirkulationsleitung mit verhältnismäßig großem Durchmesser besonders wirksam einen großen Teil der vor dem Kraftstoffdampffilter abgezogenen Gase durch das Einfüllrohr rezirkulieren kann.

Erfindungsgemäß ist die Rezirkulationsleitung an einem Ausperlbehälter angeschlossen. Ein solcher Ausperlbehälter ist üblicherweise dem Kraftstoffdampffilter vorgeschaltet, um zu verhindern, dass fein dispergierter flüssiger Kohlenwasserstoff in das Kraftstoffdampffilter gelangt. Besonders zweckmäßig ist es, wenn die Rezirkulationsleitung als Ablaufleitung des Ausperlbehälters ausgebildet ist.

Die Rezirkulationsleitung kann in diesem Falle so zwischen Einfüllrohr und Ausperlbehälter angeschlossen sein, dass bei der Betankung des Kfz eine aktive Entleerung des Ausperlbehälters gegen ein Niveaugefälle oder bei geringem Niveauunterschied zwischen dem Füllstand des Kraftstoffbehälters und dem Ausperlbehälter erfolgt.

Die aktive Entleerung des Ausperlbehälters über die Rezirkulationsleitung ist insbesondere dann sinnvoll, wenn der Ausperlbehälter innerhalb des Kraftstoffbehälters angeordnet ist. In diesem Falle ist ein großer Niveauunterschied zwischen dem Füllstand im Ausperlbehälter und dem Füllstand im Kraftstoffbehälter kaum zu realisieren. Eine solche Anordnung des Ausperlbehälters wird bevorzugt, da hierdurch die Anzahl der erforderlichen Anschlussstellen in der Behälterwandung auf ein Mindestmaß reduziert wird. Damit einher geht eine besonders vorteilhafte Reduzierung der möglichen Emissionsquellen des Behälters.

Zweckmäßigerweise sind Mittel zur Druckbeaufschlagung der Rezirkulationsleitung zu Diagnosezwecken vorgesehen. Auf diese Art und Weise wird eine sonst außerhalb des Tanks verlegte OBD(on board diagnostics)-Leitung entbehrlich. Wenn der Betankungsvorgang abgeschlossen ist, kann die Rezirkulationsleitung diese Funktion übernehmen.

Hierzu ist es zweckmäßig, in der Entlüftungsleitung ein Absperrventil vorzusehen.

Vorzugsweise ist der Ausperlbehälter an die Druckseite einer zur Dichtigkeitsüberprüfung vorgesehenen Pumpe angeschlossen. Der Ausperlbehälter kann wenigstens einen zweiten in den Kraftstoffbehälter mündenden Auslauf aufweisen, der mit einem Rückschlagventil verschlossen ist.

Die Erfindung wird nachstehend anhand eines in den Zeichnungen dargestellten Ausführungsbeispiels erläutert.

Es zeigen:
- Fig. 1: eine schematische Ansicht eines Kraftstoffbehälters gemäß der Erfindung während der Betankung und
- Fig. 2: eine schematische Ansicht des in Fig. 1 dargestellten Kraftstoffbehältes während der Dichtigkeitsüberprüfung (OBD-Funktion).

Der mit 1 bezeichnete Kraftstoffbehälter ist in dem dargestellten Ausführungsbeispiel als extrusionsblasgeformter Kunststofftank ausgebildet, dessen Wandung 2 weitestgehend gegen die Permeation von flüssigen Kohlenwasserstoffen abgedichtet ist. Dies ist allerdings für die Erfindung ohne Belang, der Kraftstoffbehälter 1 kann ebenso aus Blech oder mehrteilig aus Kunststoff ausgebildet sein, beispielsweise kann dieser.aus spritzgegossenen Halbschalen bestehen.

Der Kraftstoffbehälter 1 umfasst ein Einfüllrohr 3 und eine in dem Kraftstoffbehälter 1 angeordnete Kraftstofffördereinheit 4. Die Kraftstofffördereinheit 4 besteht in bekannter Art und Weise aus einem Schwalltopf 5 als Reservoir für eine darin angeordnete und nicht dargestellte Kraftstoffförderpumpe. Zur Entlüftung des Kraftstoffbehälters 1 bei der Betankung als auch beim Betrieb des Kfz sind Entlüftungsventile 6, 7 vorgesehen, von denen das mit 6 bezeichnete Entlüftungsventil als Betankungsentlüftungsventil ausgebildet ist, wohingegen das mit 7 bezeichnete Entlüftungsventil als Betriebsentlüftungsventil zur dauerhaften Entlüftung des Kraftstoffbehälters dient. Die Entlüftungsventile 6, 7 sind jeweils als Schwimmer-Schwerkraftventil ausgeführt, die bei Überschreiten eines vorgegebenen Füllstandsniveaus im Kraftstoffbehälter 1 oder im Roll-Over-Fall, d. h. bei Überschlag des Kfz die mit 8 bezeichneten Entlüftungsleitungen verschließen. Über diese Entlüftungsleitungen sind die Entlüftungsventile 6, 7 an einen Ausperlbehälter 9 angeschlossen, von welchem eine Hauptentlüftungsleitung 10 zu einem als Aktivkohlefilter ausgebildeten Kraftstoffdampffilter 11 führt.

Der Ausperlbehälter 9, der bei den in den Figuren dargestellten Ausführungsbeispielen in dem Kraftstoffbehälter 1 angeordnet ist, ermöglicht ein Auskondensieren von in dem Kraftstoffdampf dispergierten flüssigen Kohlenwasserstoffen. Zu diesem Zweck ist der Ausperlbehälter 9 labyrinthartig aufgeteilt, wie dies andeutungsweise in den Figuren dargestellt ist.

An das auslaufseitige Ende des Einfüllrohrs 3 ist eine mit 12 bezeichnete Rezirkulationsleitung angeschlossen, die in erster Linie eine Rezirkulation der im Kraftstoffbehälter 1 befindlichen Gase bei der Betankung des Kraftstoffbehälters 1 ermöglicht. Bei dessen Betankung wird durch den eingefüllten Kraftstoff ein entsprechendes Volumen an Gas verdrängt, welches über das Betankungsentlüftungsventil 6, den Ausperlbehälter 9, die Hauptentlüftungsleitung 10 sowie das Kraftstoffdampffilter 11 zumindest teilweise an die Atmosphäre abgegeben wird. Durch den durch den Kraftstoffstrahl im Einfüllrohr erzeugten Sog wird ein Teil dieses Gases aus dem Ausperlbehälter 9 angesaugt und durch das Einfüllrohr 3 im Kreislauf geführt, so dass das Ansaugvolumen an Umgebungsluft durch das Einfüllrohr 3 un die entsprechende Teilmenge an Gas aus dem Ausperlbehälter 9 verringert wird; entsprechend wird die Beladung des Kraftstoffdampffilters verringert. Durch die Verlegung der Rezirkulationsleitung in den Kraftstoffbehälter 1 kann diese mit verhältnismäßig großem Durchmesser ausgelegt sein, so dass die Menge der zu dem Kraftstoffdampffilter 11 geführten Gase entsprechend klein gehalten werden kann.

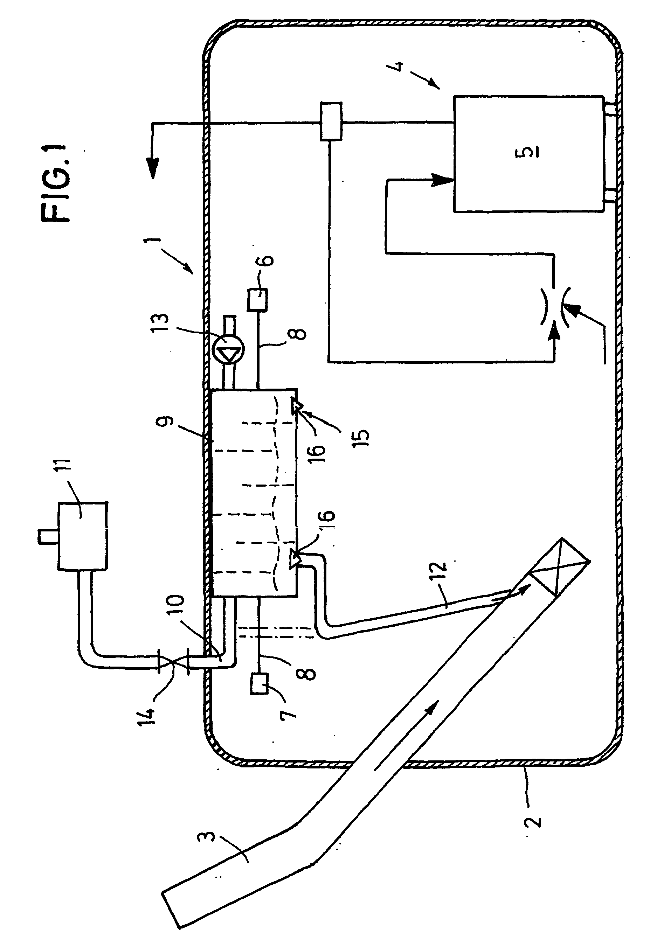

In Fig. 1 ist der Betankungsvorgang andeutungsweise dargestellt. Wie dies mit den gestrichelten Linien ebenfalls nur angedeutet ist, kann die Rezirkulationsleitung 12 auch unmittelbar an die Hauptentlüftungsleitung 10 innerhalb des Kraftstoffbehälters 1 angeschlossen sein.

Bei dem dargestellten Ausführungsbeispiel ist jedoch vorgesehen, dass die Rezirkulationsleitung 12 gleichzeitig die Funktion der Ablaufleitung für den Ausperlbehälter 9 übernimmt. Weiterhin dient die Rezirkulationsleitung 12 als Diagnoseleitung zur Dichtigkeitsüberprüfung des Kraftstoffbehälters 1 sowie des Einfüllrohrs 3, worauf im folgenden noch eingegangen wird.

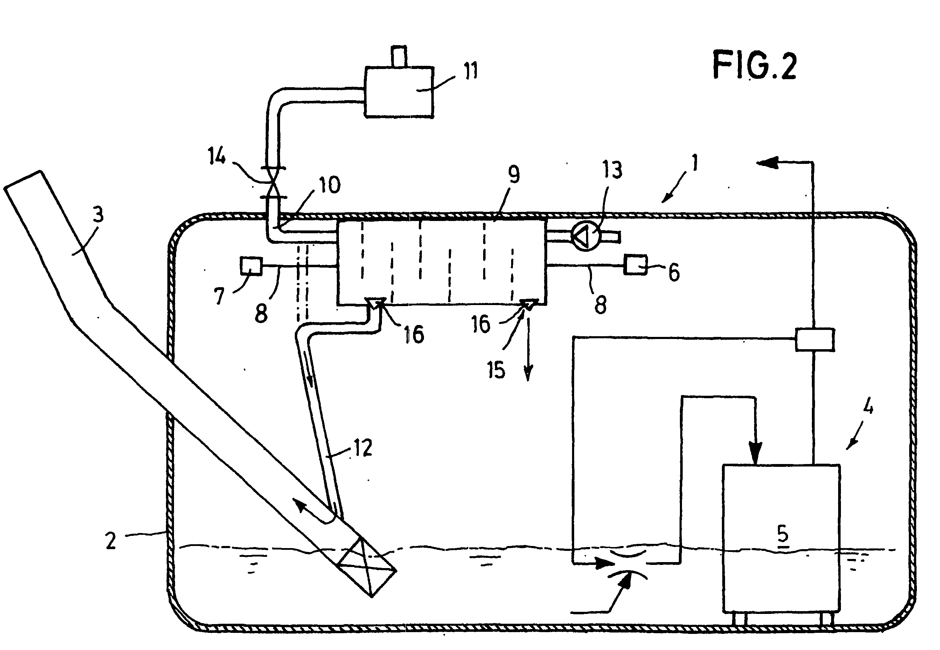

Wie dies in Fig. 2 andeutungsweise dargestellt ist, sammelt sich während des Betriebs des Kfz in dem Ausperlbehälter 9 Kondensat. Aufgrund des bei gefülltem Kraftstoffbehälter 1 geringen Niveauunterschieds zwischen dem Flüssigkeitsspiegel in dem Ausperlbehälter 9 und dem Füllstand des Kraftstoffs in dessen Hauptvolumen ist der Ablauf des Kraftstoffs aus dem Ausperlbehälter 9 erschwert. Der von dem Kraftstoffstrahl bei der Betankung in der Rezirkulationsleitung 12 erzeugte Sog wird bei dieser Ausführung zur aktiven Entleerung des Ausperlbehälters 9 genutzt. Im Bereich der Mündung der Rezirkulationsleitung 12 in den Ausperlbehälter 9 ist ein Rückschlagventil 16 vorgesehen, so dass zuverlässig ein etwaiger Eintritt von Kraftstoff in den Ausperlbehälter vermieden wird.

Die erfindungsgemäß gewählte Anordnung der Rezirkulationsleitung 12 erlaubt es, diese auch für OBD(on board diagnostics)-Zwecke zu nutzen. Zur Dichtigkeitsüberprüfung und auch - anzeige des gesamten Kfz-Tanksystems wird hierzu der Kraftstoffbehälter 1 einem Druckgefälle ausgesetzt, bei dem beschriebenen Ausführungsbeispiel wird dieser unter Überdruck gesetzt. Bei vorzeitigem Abbau des Druckgefälles wird ein Signal erzeugt, das die Undichtigkeit des Systems anzeigt. Da das Einfüllrohr 3 in der Regel endseitig verschlossen ist, beispielsweise durch eine Rückschlagklappe, ein Schnabelventil oder dergleichen (in der Zeichnung ist ein auslaufseitig des Einfüllrohrs vorgesehenes Rückschwallventil nur andeutungsweise dargestellt) stellt das Volumen des Einfüllrohrs 3 ein von dem Hauptvolumen des Kraftstoffbehälters 1 getrenntes Volumen dar, das mittels einer entsprechenden Diagnoseleitung angeschlossen werden muss. Bei Nutzung der Rezirkulationsleitung 12 für diese Zwecke entfällt eine solche separate OBD-Leitung.

Wie in den Figuren dargestellt, ist für die Dichtigkeitsüberprüfung im Inneren des Kraftstoffbehälters 1 eine OBD-Pumpe 13 vorgesehen, die druckseitig an den Ausperlbehälter 9 angeschlossen ist. In der Hauptentlüftungsleitung 10 ist in Strömungsrichtung hinter dem Kraftstoffdampffilter 11 ein Absperrventil 14 vorgesehen, mit welchem die Hauptentlüftungsleitung 10 bei der Dichtigkeitsüberprüfung verschließbar ist. Schließlich ist in dem Ausperlbehälter 9 ein zweiter Auslauf 15 vorgesehen, der ebenfalls mit einem Rückschlagventil 16 versehen ist. Über diesen zweiten Auslauf 15 wird der Ausperlbehälter 9 entleert, wenn die Rezirkulationsleitung 12, wie strichpunktiert dargestellt, direkt an die Hauptentlüftungsleitung 10 angeschlossen ist. Die aktive Entleerung eines Ausperlbehälters ist beispielsweise aus dem deutschen Gebrauchsmuster 200 19 968 bekannt.

Die Rückschlagventile 16 in dem Ausperlbehälter 9 sind jeweils als sogenannte Pilzventile ausgeführt, d. h. ein stopfenartiger Ventilkörper aus Gummi verschließt beinahe drucklos Durchtrittsöffnungen in dem Ausperlbehälter 9, so dass die Rückschlagventile 16 bei einem Druckgefälle vom Volumen des Kraftstoffbehälters 1 zum Ausperlbehälter 9 schließen, im anderen Falle öffnen.

### Bezugszeichenliste

- 1: Kraftstoffbehälter
- 2: Wandung
- 3: Einfüllrohr
- 4: Kraftstofffördereinheit
- 5: Schwalltopf
- 6: Betankungsentlüftungsventil
- 7: Betriebsentlüftungsventil
- 8: Entlüftungsleitungen
- 9: Ausperlbehälter
- 10: Hauptentlüftungsleitung
- 11: Kraftstoffdampffilter
- 12: Rezirkulationsleitung
- 13: OBD-Pumpe
- 14: Absperrventil
- 15: zweiter Auslauf
- 16: Rückschlagventile

## Patentansprüche

1. Kraftstoffbehälter (1) für ein Kfz, mit Mitteln zu dessen Be- und Entlüftung, mit wenigstens einem Einfüllrohr (3) und wenigstens einer Rezirkulationsleitung (12), die mit dem Einfüllrohr (3), kommuniziert, derart, dass kohlenwasserstoffbeladene Gase aus dem Volumen des Behälters (1) bei der Betankung des Kfz durch das Einfüllrohr (3) rezirkulierbar sind, wobei die Rezirkulationsleitung (12) an ihrem von dem Einfüllrohr (3) abliegenden Ende an eine einem Kraftstoffdampffilter (11) vorgeschaltete und mit einem Ausperlbehälter (9) kommunizierende Entlüftungsleitung (10) angeschlossen ist, **dadurch gekennzeichnet, dass** die Rezirkulationsleitung (12) innerhalb des von dem Behälter (1) umschlossenen Volumens am auslaufseitigen Ende des Einfüllrohrs (3) an dieses angeschlossen ist.

2. Kraftstoffbehälter (1) für ein Kfz, mit Mitteln zu dessen Be- und Entlüftung, mit wenigstens einem Einfüllrohr (3) und wenigstens einer Rezirkulationsleitung (12), die mit dem Einfüllrohr (3), kommuniziert, derart, dass kohlenwasserstoffbeladene Gase aus dem Volumen des Behälters (1) bei der Betankung des Kfz durch das Einfüllrohr (3) rezirkulierbar sind, **dadurch gekennzeichnet, dass** die Rezirkulationsleitung (12) innerhalb des von dem Behälter (1) umschlossenen Volumens am auslaufseitigen Ende des Einfüllrohrs (3) an dieses angeschlossen ist und dass die Rezirkulationsleitung (12) an ihrem von dem Einfüllrohr (3) abliegenden Ende an einen Ausperlbehälter (9) angeschlossen ist, der einer über ein Kraftstoffdampffilter (11) geführten Entlüftungsleitung (10) vorgeschaltet ist.

3. Kraftstoffbehälter nach Anspruch 2, **dadurch gekennzeichnet, dass** die Rezirkulationsleitung (12) als Ablaufleitung des Ausperlbehälters (9) ausgebildet ist.

4. Kraftstoffbehälter (1) nach einem der Ansprüche 2 oder 3, **dadurch gekennzeichnet, dass** die Rezirkulationsleitung (12) zwischen dem Einfüllrohr (3) und dem Ausperlbehälter (9) so angeschlossen ist, dass bei der Betankung des Kfz eine aktive Entleerung des Ausperlbehälters (9) gegen ein Niveaugefälle oder bei geringem Niveauunterschied zwischen dem Füllstand des Kraftstoffbehälters (1) und dem Ausperlbehälter (9) erfolgt.

5. Kraftstoffbehälter (1) nach einem der Ansprüche 2 bis 4, **dadurch gekennzeichnet, dass** die Rezirkulationsleitung (12) vollständig innerhalb des von dem Kraftstoffbehälter (1) umschlossenen Volumens angeordnet ist.

6. Kraftstoffbehälter (1) nach einem der Ansprüche 2 bis 4, **dadurch gekennzeichnet , dass** der Ausperlbehälter (9) innerhalb des Kraftstoffbehälters (1) angeordnet ist.

7. Kraftstoffbehälter (1) nach einem der Ansprüche 1 bis 6, **dadurch gekennzeichnet, dass** eine Pumpe (13) zur Druckbeaufschlagung der Rezirkulationsleitung (12) zu Diagnosezwecken vorgesehen ist.

8. Kraftstoffbehälter (1) nach einem der Ansprüche 1 bis 7, **dadurch gekennzeichnet, dass** in der Entlüftungsleitung (10) ein Absperrventil (14) vorgesehen ist.

9. Kraftstoffbehälter (1) nach einem der Ansprüche 7 oder 8, wenn letzterer auf Anspruch 7 rückbezogen ist **dadurch gekennzeichnet, dass** der Ausperlbehälter (9) an die Druckseite der zur Dichtigkeitsüberprüfung vorgesehenen Pumpe (13) angeschlossen ist.

10. Kraftstoffbehälter (1) nach einem der Ansprüche 1 bis 9, **dadurch gekennzeichnet, dass** der Ausperlbehälter (9) mit wenigstens einem zweiten in den Kraftstoffbehälter (1) mündenden Auslauf (15) versehen ist, der mit einem Rückschlagventil (16) verschlossen ist.

## Claims

1. A fuel tank (1) for a motor vehicle, comprising means for ventilating and venting the tank, at least one filler pipe (3) and at least one recirculation conduit (12) communicating with the filler pipe (3) in such a way that hydrocarbon-charged gases from the volume of the tank (1) are recirculatable through the filler pipe (3) when refuelling the vehicle, wherein the recirculation conduit (12) is connected at its end remote from the filler pipe (3) to a vent conduit (10) connected upstream of a fuel vapour filter (11) and communicating with a bead removal container (9), **characterised in that** the recirculation conduit (12) is connected to the filler pipe (3) within the volume enclosed by the tank (1) at the outlet end of the filler pipe (3).

2. A fuel tank (1) for a motor vehicle, comprising means for ventilating and venting the tank, at least one filler pipe (3) and at least one recirculation conduit (12) communicating with the filler pipe (3) in such a way that hydrocarbon-charged gases from the volume of the tank (1) are recirculatable through the filler pipe (3) when refuelling the vehicle, **characterised in that** the recirculation conduit (12) is connected to the filler pipe (3) within the volume enclosed by the tank (1) at the outlet end of the filler pipe (3) and that the recirculation conduit (12) is connected at its end remote from the filler pipe (3) to a bead removal container (9) connected upstream of a vent conduit (10) which is passed by way of a fuel vapour filter (11).

3. A fuel tank according to claim 2 **characterised in that** the recirculation conduit (12) is in the form of a discharge conduit of the bead removal container (9).

4. A fuel tank (1) according to one of claims 2 and 3 **characterised in that** the recirculation conduit (12) is connected between the filler pipe (3) and the bead removal container (9) in such a way that when the vehicle is being refuelled active emptying of the bead removal container (9) is effected against a drop in level or with a slight difference in level between the filling level of the fuel tank (1) and the bead removal container (9).

5. A fuel tank (1) according to one of claims 2 to 4 **characterised in that** the recirculation conduit (12) is arranged completely within the volume enclosed by the fuel tank (1).

6. A fuel tank (1) according to one of claims 2 to 4 **characterised in that** the bead removal container (9) is arranged within the fuel tank (1).

7. A fuel tank (1) according to one of claims 1 to 6 **characterised in that** there is provided a pump (13) for pressurising the recirculation conduit (12) for diagnostic purposes.

8. A fuel tank (1) according to one of claims 1 to 7 **characterised in that** a shut-off valve (14) is provided in the vent conduit (10).

9. A fuel tank (1) according to one of claims 7 and 8 when the latter is appendant to claim 7 **characterised in that** the bead removal container (9) is connected to the pressure side of the pump (13) for checking sealing integrity.

10. A fuel tank (1) according to one of claims 1 to 9 **characterised in that** the bead removal container (9) includes at least one second outlet (15) which opens into the fuel tank (1) and which is closed by a check valve (16).

## Revendications

1. Réservoir de carburant (1) pour un véhicule moteur, pourvu de moyens pour sa ventilation et son évacuation d'air, avec au moins un tuyau de remplissage (3) et au moins une conduite de recirculation (12), qui communique avec le tuyau de remplissage (3) de manière à ce que les gaz chargés en hydrocarbure puissent recirculer hors du volume du réservoir (1) lors du ravitaillement du véhicule moteur par le tuyau de remplissage (3), la conduite de recirculation (12) étant reliée à son extrémité à l'écart du tuyau de remplissage (3) à une conduite d'évacuation d'air (10) communiquant avec un réservoir d'ébullition (9) et disposée avant un filtre à vapeur de carburant (11), **caractérisé en ce que** la conduite de recirculation (12) est reliée à l'intérieur du volume entouré par le réservoir (1) sur l'extrémité d'écoulement du tuyau de remplissage (3) à celui-ci.

2. Réservoir de carburant (1) pour un véhicule moteur, pourvu de moyens pour sa ventilation et son évacuation d'air, avec au moins un tuyau de remplissage (3) et au moins une conduite de recirculation (12), qui communique avec le tuyau de remplissage (3) de manière à ce que les gaz chargés en hydrocarbure puissent recirculer hors du volume du réservoir (1) lors du ravitaillement du véhicule moteur par le tuyau de remplissage (3), **caractérisé en ce que** la conduite de recirculation (12) est reliée à l'intérieur du volume entouré par le réservoir (1) sur l'extrémité d'écoulement du tuyau de remplissage (3) à celui-ci et **en ce que** la conduite de recirculation (12) est reliée à un réservoir d'ébullition (9), qui est disposé avant une conduite d'évacuation d'air (10) guidée par un filtre à vapeur de carburant (11), sur son extrémité à l'écart du tuyau de remplissage (3).

3. Réservoir de carburant selon la revendication 2, **caractérisé en ce que** la conduite de recirculation (12) est conçue comme une conduite d'écoulement du réservoir d'ébullition (9).

4. Réservoir de carburant (1) selon l'une quelconque des revendications 2 ou 3, **caractérisé en ce que** la conduite de recirculation (12) est reliée entre le tuyau de remplissage (3) et le réservoir d'ébullition (9) de manière à ce que, lors du ravitaillement du véhicule moteur, un vidage actif du réservoir d'ébullition (9) s'effectue en raison d'une baisse de niveau ou à faible différence de niveau entre l'état rempli du réservoir de carburant (1) et le réservoir d'ébullition (9).

5. Réservoir de carburant (1) selon l'une quelconque des revendications 2 à 4, **caractérisé en ce que** la conduite de recirculation (12) est entièrement disposée à l'intérieur du volume entouré par le réservoir de carburant (1).

6. Réservoir de carburant (1) selon l'une quelconque des revendications 2 à 4, **caractérisé en ce que** le réservoir d'ébullition (9) est disposé à l'intérieur du réservoir de carburant (1).

7. Réservoir de carburant (1) selon l'une quelconque des revendications 1 à 6, **caractérisé en ce qu'**une pompe (13) est prévue pour l'alimentation en pression de la conduite de recirculation (12) dans des buts de diagnostic.

8. Réservoir de carburant (1) selon l'une quelconque des revendications 1 à 7, **caractérisé en ce qu'**un robinet d'arrêt (14) est prévu dans la conduite d'évacuation d'air (10).

9. Réservoir de carburant (1) selon l'une quelconque des revendications 7 ou 8, si la dernière se réfère à la revendication 7, **caractérisé en ce que** le réservoir d'ébullition (9) est relié sur le côté de pression de la pompe (13) prévue au contrôle de l'étanchéité.

10. Réservoir de carburant (1) selon l'une quelconque des revendications 1 à 9, **caractérisé en ce que** le réservoir d'ébullition (9) est pourvu d'au moins un second écoulement (15) débouchant dans le réservoir de carburant (1), qui est fermé par un clapet anti-retour (16).
